# EUROPÄISCHE PATENTSCHRIFT

(11) **EP 3 931 383 B1**
(45) Veröffentlichungstag und Bekanntmachung des Hinweises auf die Patenterteilung: **29.03.2023**
(21) Anmeldenummer: 20706666.3
(22) Anmeldetag: 18.02.2020
(51) Int. Cl.: D04H 1/46, B32B 5/02, B32B 5/26, D01G 15/46, D01G 25/00, D04H 1/498, D04H 1/559

(54) **VORRICHTUNG ZUR HERSTELLUNG VON NADELVLIESEN**
APPARATUS FOR PRODUCING NEEDLE-PUNCHED NONWOVENS
DISPOSITIF POUR LA FABRICATION DE NAPPES AIGUILLETÉES

(30) Priorität: 26.02.2019 DE 102019104851
(43) Veröffentlichungstag der Anmeldung: 05.01.2022
(73) Patentinhaber: Adler Pelzer Holding GmbH, 58099 Hagen (DE)
(72) Erfinder: BERNHARDT, Siegfried, 28777 Bremen (DE); SCHULZE, Volkmar, 84069 Schierling (DE)
(74) Vertreter: Bittner, Bernhard
(86) Internationale Anmeldenummer: PCT/EP2020/054152
(87) Internationale Veröffentlichungsnummer: WO 2020/173747

(56) Entgegenhaltungen:
- WO-A1-2012/052535
- WO-A1-2017/148711

## Beschreibung

Gegenstand der Erfindung ist eine Vorrichtung zur Herstellung von Nadelvliesen, die es ermöglicht, gleiche und unterschiedliche Materialien über die Vliesdicke und/oder Vliesbreite in die jeweiligen Einzellagen eines mehrlagigen Vlieses individuell bereits bei deren Herstellung einzubringen.

Als Basisvlies finden insbesondere PP/PET-, PP/BiCo-, PP/BiCo/PET- und PET/Bico- Mischfaservliese im Grammaturbereich von 400 bis 1800 g/m² Anwendung, deren Einsatz insbesondere im Exterieur-Bereich von Kraftfahrzeugen zu sehen ist.

Im Stand der Technik sind Verfahren zur Herstellung von Velours-Teppichen bekannt; siehe unter anderem DE 44 09 771 A1, DE 29 00 935 C2 und DE 10 2008 026 968 A1.

Karde- oder Krempel-Anlagen zur Faserflor-Herstellung werden beispielsweise in US 2018/0051400 A1, WO 2017/178148 A1, US 2016/0362818 A1, DE 10 2015 112 777 A1 und DE 10 2014 009 339 A1 beschrieben. Speziell zu Vlieslegern findet man Ausführungen in US 3 903 569, DE 10 2010 050 027 A1 und DE 20 2012 102 597 U1.

Darüber hinaus sind Verfahren zur Herstellung von sogenannten Recycling-Sandwich-Vliesen beziehungsweise -Bauteilen im Stand der Technik beschrieben, bei den zum einen die Press-Technologie (DE 10 2016 202 290 A1) und zum anderen das Vernadeln (DE 10 2013 222 403 A1, DE 10 2016 203 348 A1) angewendet wird.

WO 2012/052535 A1 betrifft ein Verfahren zur Herstellung eines Verbundvlieses in einer kontinuierlichen Prozessfolge sowie eine Vorrichtung zur Durchführung des Verfahrens. Hierbei wird aus einem Faserstrom durch eine Kardiereinrichtung ein Faserflor gebildet, an dessen Oberfläche anschließend eine Vlieslage aus Synthetikfasern gelegt wird. Hierzu wird das Faserflor innerhalb einer Saugzone an einem Ablageband zu einer Schmelzblaseinrichtung geführt, in welcher die Synthetikfasern durch Schmelzblasen an der Oberfläche des Faserflors gelegt werden. Der mit der Vliesanlage belegte Faserflor wird anschließend durch eine Vliesverlegereinrichtung in mehrere Schichten zu dem Verbundvlies verlegt.

Aus dem Stand der Technik sind keine Verfahren oder Vorrichtungen bekannt, die ein Einstreuen von gleiche oder unterschiedlichen Materialien in die Einzellagen eines mehrlagigen Vlieses bei deren Herstellung beschreiben.

Die Aufgabe der vorliegenden Erfindung gegenüber dem vorgenannten Stand der Technik besteht somit die Bereitstellung einer Vorrichtung zur Herstellung von Vliesen, die es ermöglicht, bereits bei der VliesHerstellung über die Dicke und/oder Breite des Vlieses gleiche oder unterschiedliche Materialien und/oder Mengen als Mahlgut und/oder Fasern und/oder Flocken und/oder Pulver in die jeweiligen Einzellagen einzustreuen und den erhaltenen Verbund nach dem Legen des Vlieses zu vernadeln.

Gegenstand der vorliegenden Erfindung ist in einer ersten Ausführungsform eine Vorrichtung zur Herstellung von mehrlagigen Nadelvliesen mit gleichen oder unterschiedlichen Materialien über die Vliesdicke und/oder Vliesbreite der jeweiligen Einzellagen, die dadurch gekennzeichnet ist, dass
sie Streueinrichtungen 4, 5, 6, 7 zum Aufbringen der Materialien auf wenigstens eine oder mehrere unvernadelte oder vernadelte Faserflor-lage(n) 1, 2 aufweist, wobei sich eine oder mehrere der Streueinrichtungen 4, 5, 6, 7 zwischen Abnehmer-Transport-Bändern 11, 12 einer Krempel 10 befinden.

Mit Hilfe der erfindungsgemäßen Vorrichtung ist es möglich, entsprechend den insbesondere akustischen und mechanischen Anforderungen beispielsweise an eine textile Radlaufschale, gleiche oder unterschiedliche Materialien und Mengen als Mahlgut und/oder Fasern und/oder Flocken und/oder Pulver zwischen die Faserflore 1, 2 einzustreuen, wobei die mögliche Zuschaltung und/oder Steuerung der Streueinrichtungen 4, 5, 6, 7 entsprechend der benötigten Materialientypen und/oder Materialmengen erfolgt,
die Faserflore 1,2 mit den dazwischenliegenden Materialien zu einer Einzellage 3 zu legen,
die Einzellagen 3 zu einer Mehrfachlage 9 zu einem Materialverbund 8 zu legen und
den Materialverbund 8 zu vernadeln.

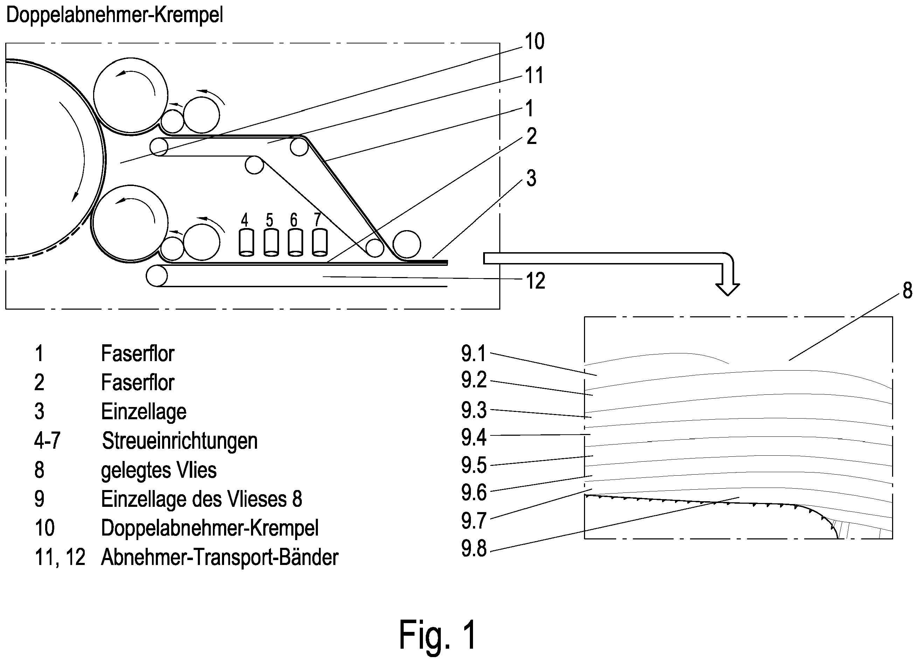

Die Vorrichtung umfasst in einer bevorzugten Ausführungsform eine Doppelabnehmer-Krempel 10 (Fig. 1), bei der die Streueinrichtungen 4, 5, 6, 7 zwischen den beiden Abnehmer-Transport-Bändern 11, 12 angeordnet und hier unterschiedlich ansteuerbar und/oder zuschaltbar sind.

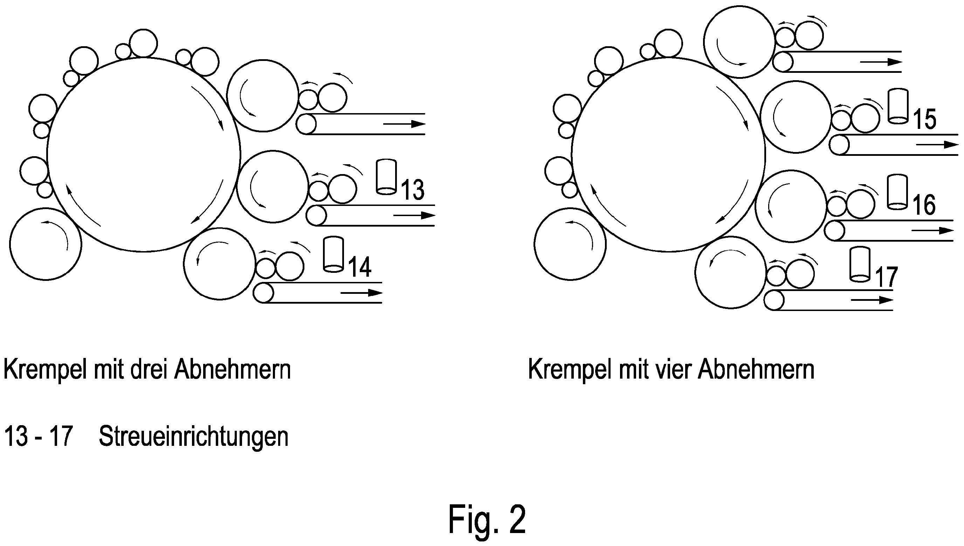

In Fig. 2 ist jeweils eine Mehrabnehmer-Krempel mit den entsprechenden Streueinrichtungen 13, 14 und 15, 16, 17 dargestellt.

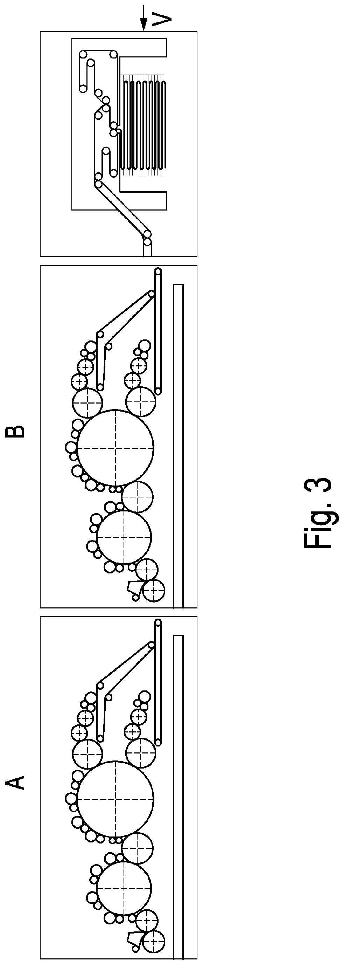

In Fig. 3 sind 2 Krempeln hintereinander angeordnet und die Lagen gehen dann auf einen Leger. Dies ermöglicht eine gute Wechselseitigkeit und Variabilität der einzustreuenden Materialien. Auch sind bei dieser Anordnung unterschiedliche Basisvlies-Qualitäten durch selektive Auswahl der Einzellagen realisierbar.

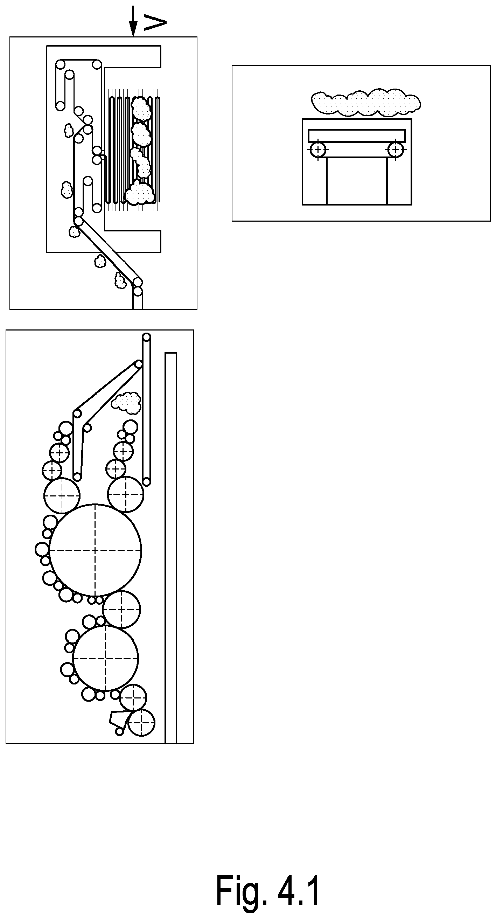

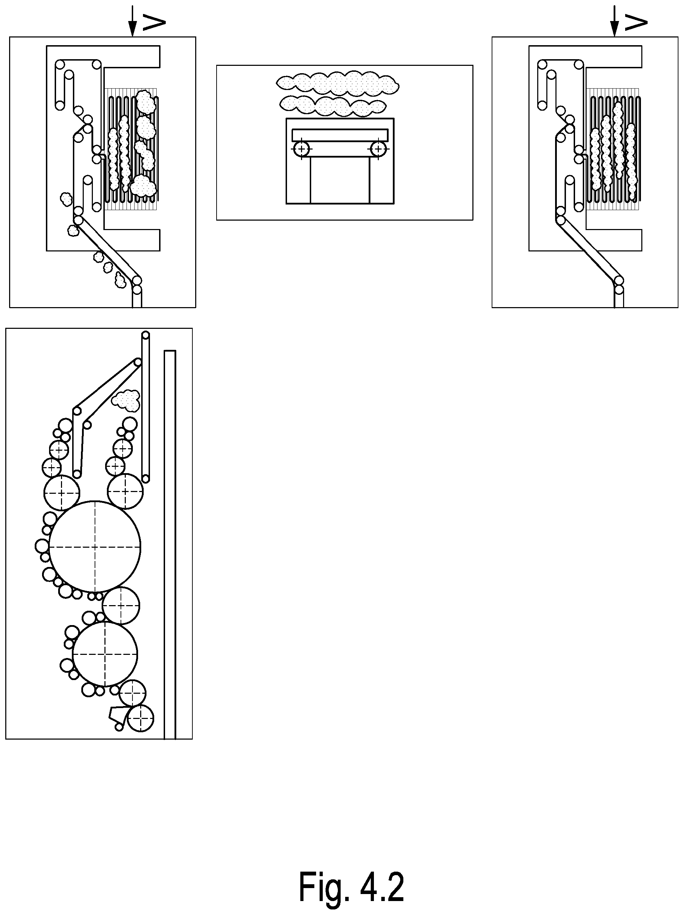

In Fig. 4 zeigt die Anordnung 2 Krempeln und 2 Leger nebeneinander angeordnet. Der Vorteil dieser Anordnung ist, dass in Bezug auf Anzahl der Lagen je Leger und damit oben beziehungsweise unten gleiche oder unterschiedliche Streu-Materialien anwendbar sind. Die Verteilung des Streu-Materials und damit die Variation der Gewichtsbereiche ist hiermit gegeben.

Kern der vorliegenden Erfindung ist somit die Bereitstellung einer Vorrichtung die es ermöglicht, gleiche oder unterschiedliche Materialien und /oder Mengen als Mahlgut- und/oder Fasern- und/oder Flocken- und/oder Pulver-Form zwischen Faserflore bei einer Krempel bedarfsorientiert -je nach akustischen und mechanischen Anforderungen des aus dem Vlies zu fertigenden Bauteils einzustreuen und zu vernadeln.

Die erfindungsgemäße Vorrichtung ermöglicht somit durch die Anordnung von Streuvorrichtungen 4, 5, 6, 7 zwischen die Abnehmer einer Krempel und deren Steuerung das bedarfsorientierte Einstreuen.

Der Vorteil der vorliegenden Erfindung besteht in der Bereitstellung von verformungsgerechten/-stabilen Vliesen, bei denen bereits bei deren Herstellung eigenschaftsbeeinflussende Schichtstrukturen über Dicke und/oder Breite der jeweiligen Einzellagen erzeugt werden können.

Damit entfällt bei der Herstellung von Bauteilen das Kaschieren, Vernähen und dergleichen von Einzellagen sowie das aufwendige Rollen- oder Platinenwechseln; es entfallen Kaschieranlagen und damit verbunden geht insbesondere eine Zykluszeitverkürzung einher.

Ausführungsbeispiel:
Zur Herstellung eines verformungsgerechten/-stabilen Vlieses umfassend 8 Einzellagen mit einer Gesamtgrammatur von 1600 g/m² für die Herstellung von textilen Radlaufschalen wird in eine erste -später dem Rad zugewandten- Lage aus 150 g/m² Glasfaser/Panox/PET/BiCo-Mahlgut und in eine zweite, der ersten Lage folgenden, 150 g/m² PP/PET/BiCo-Mahlgut und in die äußere, später der Karosserie zugewandten achten Lage, 150 g/m² Glasfaser/Panox/PET/BiCo-Mahlgut sowie in die darunter liegende siebte Lage 150 g/m² Mineral- und Glasfaser-Mahlgut eingestreut und vernadelt. Das Basisvlies besteht aus einem handelsüblichen 40 Gew.-% PP- und 60 Gew.-% PET-Faser.

Anwendung hierzu findet eine erfindungsgemäße Vorrichtung mit den Streuvorrichtungen wie oben beschrieben.

Das Vlies wurde anschließend mit Standard-Verfahren [Kontaktheizfeld (T= 200°C; t= 50sec; Spaltweite=4mm), Werkzeug (T= 20°C; t= 50sec; Spaltweite= 3,5mm)] zu Radlaufschalen verformt.

Die Radlaufschale hat durch die eingestreuten und vernadelten Materialien ein verbessertes Verhalten hinsichtlich Steifigkeit, Temperaturbeständigkeit und Brennbarkeit.

## Patentansprüche

1. Vorrichtung zur Herstellung von mehrlagigen Nadelvliesen mit gleichen oder unterschiedlichen Materialien und Mengen über die Vliesdicke und/oder Vliesbreite der jeweiligen Einzellagen, **dadurch gekennzeichnet, dass**
sie Streueinrichtungen (4, 5, 6, 7) zum Aufbringen der Materialien auf wenigstens eine oder mehrere unvernadelte oder vernadelte Faserflor-lage(n) (1, 2) aufweist, wobei sich eine oder mehrere der Streueinrichtungen (4, 5, 6, 7) zwischen Abnehmer-Transport-Bändern (11, 12) einer Krempel (10) befinden.

2. Vorrichtung nach Anspruch 1, umfassend eine Krempel (10) mit zwei, drei oder vier Abnehmern.

3. Vorrichtung nach Anspruch 1 oder 2, umfassend zwei hintereinander angeordnete Krempeln (10), wobei die Lagen auf einen Leger ablegbar sind.

4. Vorrichtung nach Anspruch 1 oder 2, umfassend zwei Krempeln (10) und zwei nebeneinander angeordnete Leger.

5. Vorrichtung nach einem der Ansprüche 1 bis 4, umfassend ansteuerbare und/oder zuschaltbare Streueinrichtungen (4, 5, 6, 7) zwischen zwei Abnehmer-Transport-Bändern (11, 12).

## Claims

1. Apparatus for producing multilayer needle-punched nonwovens with the same or different materials and quantities over the nonwoven thickness and/or nonwoven width of the respective individual layers, **characterized in that**
it comprises spreading devices (4, 5, 6, 7) for applying the materials to at least one or more un-needled or needled fiber pile layer(s) (1, 2), wherein one or more of the spreading devices (4, 5, 6, 7) are located between doffer conveyor belts (11, 12) of a carding machine (10).

2. The apparatus according to claim 1, comprising a carding machine (10) having two, three or four doffers.

3. The apparatus according to claim 1 or 2, comprising two cards (10) arranged one behind the other, wherein the layers can be deposited on a lay-up device.

4. The apparatus according to claim 1 or 2, comprising two cards (10) and two lay-up devices arranged next to each other.

5. The apparatus according to one of the claims 1 to 4, comprising controllable and/or connectable spreading devices (4, 5, 6, 7) between two doffer conveyor belts (11, 12).

## Revendications

1. Dispositif de fabrication de non-tissés aiguilletés multicouches avec des matériaux et des quantités identiques ou différents sur l'épaisseur de non-tissé et/ou la largeur de non-tissé des couches individuelles respectives, **caractérisé en ce que**
il présente des systèmes de dispersion (4, 5, 6, 7) destinés à appliquer les matériaux sur au moins un ou plusieurs voiles de carde (1, 2) non aiguilletés ou aiguilletés, dans lequel un ou plusieurs des systèmes de dispersion (4, 5, 6, 7) se trouvent entre des bandes de transport de peigneur (11, 12) d'une carde (10).

2. Dispositif selon la revendication 1, comprenant une carde (10) avec deux, trois ou quatre peigneurs.

3. Dispositif selon la revendication 1 ou 2, comprenant deux cardes (10) disposées l'une derrière l'autre, dans lequel les couches peuvent être placées sur un étaleur-nappeur.

4. Dispositif selon la revendication 1 ou 2, comprenant deux cardes (10) et deux étaleurs-nappeurs disposés côte à côte.

5. Dispositif selon l'une quelconque des revendications 1 à 4, comprenant des systèmes de dispersion (4, 5, 6, 7) pouvant être commandés et/ou activés entre deux bandes de transport de peigneur (11, 12).
